Europäisches Patentamt

European Patent Office

Office européen des brevets

(19)

(11) Veröffentlichungsnummer: **0 149 195**
**B1**

(12) **EUROPÄISCHE PATENTSCHRIFT**

(45) Veröffentlichungstag der Patentschrift: **04.04.90**

(21) Anmeldenummer: **84115948.6**

(22) Anmeldetag: **20.12.84**

(51) Int. Cl.⁵: **B 29 C 47/00, B 29 C 67/22 //**
**B29K27:06, B29K105:04,**
**B29K105:12, B29K105:26,**
**B29L31:60**

(54) Integralschaumkörper und Verfahren zu seiner Herstellung.

(30) Priorität: **17.01.84 DE 3401438**

(43) Veröffentlichungstag der Anmeldung:
**24.07.85 Patentblatt 85/30**

(45) Bekanntmachung des Hinweises auf die
Patenterteilung:
**04.04.90 Patentblatt 90/14**

(84) Benannte Vertragsstaaten:
**AT BE CH DE FR GB IT LI LU NL SE**

(56) Entgegenhaltungen:
**DE-A-2 158 782**
**DE-A-2 923 242**
**DE-A-3 113 810**
**GB-A- 618 094**
**US-A-3 474 048**
**US-A-3 790 436**
**US-A-4 178 411**

**PATENT ABSTRACTS OF JAPAN, Band 6, Nr. 45**
**(M-118)923r, 20 März 1982; & JP-A-56 161 126**
**(MITSUBISHI YUKA K.K.) 11-12-1981**

(73) Patentinhaber: **Gebrüder Kömmerling**
**Kunststoffwerke GmbH**
**Zweibrücker Strasse 200**
**D-6780 Pirmasens (DE)**

(72) Erfinder: **Kohl, Walter, Dr.phil.**
**Händelstrasse 5**
**D-6780 Pirmasens (DE)**

(74) Vertreter: **Stapf, Otto F., Dipl.-Ing. et al**
**Patentanwälte Dr. Berg Dipl.-Ing. Stapf Dipl.-Ing.**
**Schwabe Dr. Dr. Sandmair Postfach 86 02 45**
**Stuntzstrasse 16**
**D-8000 München 86 (DE)**

## Beschriebung

Die Erfindung betrifft einen Integralschaumkörper der im Oberbegriff des Anspruchs 1 angegebenen Gattung sowie ein Verfahren zur Herstellung eines solchen Integralschaumkörpers der im Oberbegriff des Anspruchs 10 angegebenen Gattung.

Unter einem "Integralschaumkörper" versteht man einen Schaumstoffkörper, dessen Kern aus einem geschäumten, thermoplastischen Werkstoff mit einer kompakten Haut aus dem gleichen, jedoch ungeschäumten Werkstoff besteht. Die kompakte Haut hat eine Dicke von 0,2 mm bis 2 mm, in der Regel etwa 1 mm.

Die Außenfläche eines solchen Integralschaumkörpers hat das Aussehen eines massiven Körpers aus dem gleichen, thermoplastischen Werkstoff, ein Integralschaumkörper hat jedoch ein wesentlich geringeres Gewicht als ein solcher massiver Körper, gleichzeitig aber eine Biegesteifigkeit, die näherungsweise der eines massiven Körpers gleicher Dimensionen entspricht, jedoch die eines solchen Körpers gleichen Gewichtes erheblich übertrifft.

Die kompakte, weitgehend porenfreie Haut des Integralschaumkörpers läßt sich durch eine geeignete Temperierung der Außenoberfläche des aufschäumenden thermoplastischen Werkstoffes erreichen.

Verfahren zur Herstellung extrudierter Integralschaumprofile aus thermoplastischen Werkstoffen sind aus der DE—A—17 29 076 und der DE—A—19 13 921 bekannt.

Weiterhin geht aus der DE—A—30 11 692 hervor, relativ dicke und lange Stapelfasern zwischen den Kugeln eines Polyvinylchlorid-Schaumkugeln zusammengesetzten Körpers einzulagern, nachdem sie vorher mit einem Haftvermittler beschichtet worden sind. Dadurch soll ein räumliches Stützgitter für die einzelnen Schaumkugeln des PVC-Schaums gebildet werden, um etwa das Ausbröckeln des fertigen Schaumkörpers zu vermeiden.

Außerdem ist es aus der DE—A—30 16 333 bekannt, dem flüssigen Ausgangsmaterial für einen duroplastischen Werkstoff bis zu etwa einem Drittel seines Gewichtes sehr kurze Stapelfasern beizumengen und dieses Gemisch dann anschließend innig mit einem Gas zu vermischen, dessen Bläschen im Ausgangsmaterial die sonst von einem Treibmittel erzeugten Gasblasen ersetzen sollen und durch die feinen Stapelfasern bis zum Abschluß der Aushärtung des Werkstoffes fixiert werden.

Es ist auch bereits vorgeschlagen worden, weiche kurze Stapelfasern in extrudierte, flexible Schläche aus einem massiven, thermoplastischen Werkstoff einzubetten.

Aus der DE—A—29 23 242 geht ein Verfahren zur Herstellung eines Verteilerstranges für Warm- und Kaltwasserleitungen hervor, bei dem ein strangförmiger Grundkörper aus Schaumkunststoff mit verdichteten Kanalwandungen verwendet wird. Es handelt sich dabei um ein Schaummaterial dessen spezifisches Gewicht an den Wandungen erhöht wird, als geeignete Kunststoffe werden kristalline Thermoplaste oder duromere Kunststoffe erwähnt. Außerdem wird darauf hingewiesen, daß es zweckmäßig sein kann, eine zusätzliche Faserverstärkung in den strangförmigen Grundkörper einzuformen. Dabei kann es sich nur um Rovings, also endlose Faserstränge, handeln, da nur so die formgerechte Einlagerung möglich ist.

Aus den Patent Abstracts of Japan, Band 6, Nr. 45, 20. März 1982 und JP—A—56161126 vom 11.12.1981 ist die Herstellung von Integralschaumkörpern bekannt, dabei werden der als Ausgangsmaterial dienende, hochpolymere Werkstoff, ein Schäumungsmittel und Verstärkungsfasern zusammen in einem Extruder gemischt, erwärmt, extrudiert und dann abgekühlt.

Ein Integralschaumkörper der im Oberbegriff des Anspruchs 1 angegebenen Gattung sowie ein Verfahren zur Herstellung eines solchen Integralschaumkörpers gehen schließlich aus der DE—A—2 546 373 hervor; der beschriebene Integralschaumkörper weist einen Kern aus einem geschäumten, thermoplastischen Werkstoff, eine kompakte Haut aus dem gleichen Werkstoff sowie mindestens 10 Gew.-% in den Kern eingebettete und über sein Volumen gleichmäßig verteilte Stapelfasern hoher Zugfestigkeit mit einer Länge von 2 bis 20 mm auf.

Das aufschäumbare Ausgangsgemisch wird mit den Stapelfasern gemischt, aufgeschäumt und geformt, wobei die Bildung der Integralschaumhaut durch Regulieren der Temperatur der Raumwände gesteuert wird.

Die verwendeten Stapelfasern führen zwar zu einer Verbesserung der mechanischen Eigenschaften des fertigen Integralschaumkörpers; nachteilig ist jedoch die relativ aufwendige Herstellung mit einem langwierigen Mischprozess; außerdem lassen die mechanischen Eigenschaften des bekannten Integralschaumkörpers noch zu wünschen übrig.

Der Erfindung liegt deshalb die Aufgabe zugrunde, einen Integralschaumkörper der angegebenen Gattung bzw. ein Verfahren zur Herstellung eines solchen Integralschaumkörpers der angegebenen Gattung dahingehend weiterzubilden, daß eine Massenfertigung mit geringem Aufwand möglich ist.

Diese Aufgabe wird erfindungsgemäß durch die in den kennzeichnenden Teilen der Ansprüche 1 und 10 angegebenen Merkmale gelöst.

Zweckmäßige Ausführungsformen werden durch die Merkmale der Unteransprüche 2 bis 9 definiert.

Die mit der Erfindung erzielten Vorteile beruhen auf der überraschenden Erkenntnis, daß bei einem Integralschaumkörper aus Hart-Polyvinylchlorid auch relativ hohe Anteile an Stapelfasern, nämlich bis zu 20 Gew.-% Stapelfasern, in den Kern und auch in die kompakte Außenhaut eingebettet werden können, ohne daß man eine Verschlechterung der Oberfläche erhält. Selbst bei Verwendung von etwa 20 Gew.-% Stapelfasern ergibt sich die übliche, glatte und extrem widerstandsfähige massive bzw. kompakte Außenhaut, die im Vergleich mit dem porösen Schaumstoffkern eine erhöhte mechanische Festigkeit hat.

Weiterhin ist überraschend, daß sich auch die naturgemäß harten und relativ spröden Stapelfasern hoher Festigkeit in einem Extruder verarbeiten lassen, ohne daß sie in unzulässig hohem Maße zerkleinert werden müssen. Sie behindern auch das Ausschäumen des Hart-Polyvinylchlorid nach dem Austritt aus der Extrusionsdüse nicht.

Wenn das Hart-Polyvinylchlorid nach der Extrusion aufgeschäumt und durch Kühlung der Oberflächen der Formgebungskanäle eine Integralhaut gebildet wird, ergibt sich ein Integralschaumkörper mit einer Oberfläche, deren Beschaffenheit durch Wahl des Faseranteils und der Schaumdichte problemlos eingestellt werden kann; so führen eine hohe Faserfüllung und ein schwerer Schaum zu einer glatten Oberfläche, während eine hohe Faserfüllung und ein leichter Schaum eine rauhe Oberfläche (die aber nicht etwa unansehnlich ist) und ein sehr leichter Schaum und ein bis zu 15 prozentiger Anteil der Faserfüllung wieder eine glatte Oberfläche ergeben.

Ein solcher Integralschaumkörper hat noch eine Reihe weiterer Vorteile: So ist z. B. der Schrumpf, der bei einem extrudierten Integralschaumkörper bei erhöhten Temperaturen zwangsläufig auftritt, stark verringert; in gleicher Weise lassen sich auch die Wärmeausdehnung und damit die Verzugsneigung bei einseitiger Temperaturbelastung reduzieren. Ein solcher Integralschaumkörper hat eine unerwartet hohe Kugeldruckhärte und auch in Bezug auf Biegemodul, zulässige Biege- und Druckspannung sowie Schraubenauszugskraft erhöhte Festigkeitswerte.

Als Material für die Stapelfasern wird bevorzugt E- und C-Glas verwendet. Bewährt haben sich z.B. Glasfasern der Firma Owens-Corning Fiberglas Europe, Brüssel, die unter den Typenbezeichnungen 885 ZZ, 429 ZZ und 429 YZ vertrieben werden.

Überraschenderweise kann ein solcher Integralschaumkörper nicht nur aus frischem Hart-PVCpulver, sondern zumindest zum Teil auch aus PVC-Abfällen und/oder PVC-Regenerat hergestellt werden. Die speziellen Eigenschaften des aufgeschäumten Hart-PVC beeinträchtigen die Verteilung der Stapelfasern und die Oberflächenbildung, also die saubere Oberfläche trotz der Einlagerung der Fasern, nicht.

Dieser Integralschaumkörper kann auch als Verbundkörper ausgebildet sein, bei dem ein fester Trägerkörper, etwa ein Metall-Hohlprofil, mit dem faserversetzten, extrudiertem Hart-Polyvinylchlorid extrusionsbeschichtet ist.

In Folge der geringen Wärmeausdehnung und des geringen Schrumpfes des Integralschaumkörpers bewahrt ein solcher Verbundkörper stets die gute Haftung zwischen dem Hart-PVC-Schaum und dem metallischen Trägerkörper, ohne daß im Übergangsbereich oder im Schaumstoff Spannungsschäden auftreten können.

Aus den erwähnten Gründen, nämlich wegen der Verbesserung der mechanischen Eigenschaften, wird ein solcher Integralschaumkörper bevorzugt dort eingesetzt, wo er einseitiger Wärmebelastung ausgesetzt ist und eine glatte oder strukturierte, ästhetisch einwandfreie Oberfläche benötigt wird, dieser Integralschaumkörper eignet sich deshalb besonders für die Ausbildung als Rahmenstab für Tür-, Fensterstock- oder Flügelrahmen, als Verkleidungsstab oder -brett, als Geländerlauf oder als Zaun- oder Geländerplatte.

Da der Integralschaumkörper auch als Hohlkörper ausgebildet sein kann, läßt er sich entsprechend der jeweils zu erwartenden Belastung mit dem geringstmöglichen Materialaufwand und somit zu einem besonders günstigen Preis herstellen.

Um eine Zerstörung der Stapelfasern, insbesondere von Glasfasern, etwa durch Ausfasern ihrer Enden bereits während des Mischvorgangs und insbesondere während des Plastifizierungsvorganges zu vermeiden, werden die Stapelfasern in Einzelstapeln aus zusammengefaßten, einzelnen Stapelfasern dem Gemisch aus Hart-Polyvinylchlorid-Partikeln, Treibmitteln und gegebenenfalls Stabilisatoren und anderen Extrusionshilfsstoffen zugeführt. Diese Einzelstapel stellen den Zusammenhalt und damit die gegenseitige Abstützung der Stapelfasern während des Mischvorganges sowie während des Einlaufes in den Extruder sicher und werden erst innerhalb des Extruders soweit aufgeschlossen, daß sich die einzelnen Stapelfasern auf die angestrebte Weise in dem plastifizierten Hart-PVC verteilen können.

Die Einzelstapeln fördern gleichzeitig auch die Rieselfähigkeit des Gemischs und stellen somit die gleichmäßige Beschichtung und damit auch die gleichbleibende Beschaffenheit des Gemisches sicher, wodurch wiederum der Aufwand beim Beschicken verringert und die konstante Qualität des erzeugten Integralschaumkörpers beibehalten werden kann.

Zweckmäßigerweise wird dem Gemisch etwas mehr Treibmittel, und zwar mindestens 1 % mehr Treibmittel zugesetzt als dies bei der Extrusion eines faserfreien Integralschaumkörpers erforderlich wäre; dadurch läßt sich die angestrebte gleichmäßige Verteilung der Fasern auf das gesamte Volumen des Integralschaumkörpers erreichen.

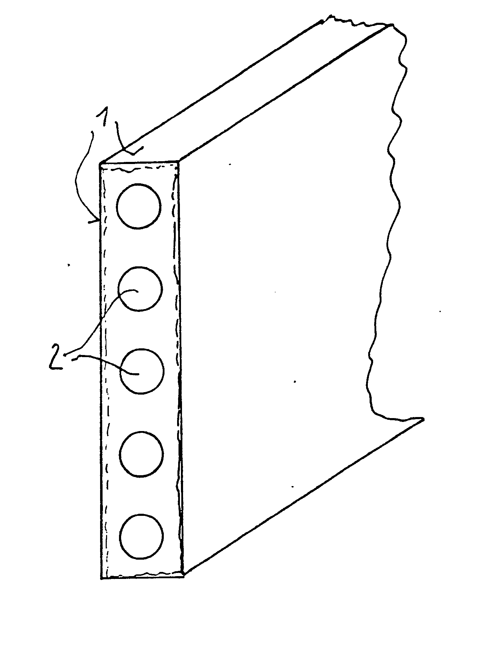

Die Erfindung wird im folgenden anhand eines Ausführungsbeispiels unter Bezugnahme auf die beiliegende, schematische Zeichnung näher erläutert, deren einzige Figur im Schrägbild die Endansicht eines profilstabes für ein Geländer zeigt, der durch einen Integralschaumkörper gebildet wird.

Ein solcher Geländerstab dient zur Verkleidung der Außenbegrenzung eines Balkons und muß daher trotz jahrelanger Witterungseinwirkung Belastungen standhalten, wie sie etwa auftreten, wenn eine Person ausgleitet und gegen das Balkongeländer stürzt; dann darf der Balkonprofilstab weder nachgeben, noch brechen, noch an den Schraubensitzen ausreißen.

Der gezeigte Geländerstab ist als brettförmiger Körper mit länglichem Rechteckquerschnitt ausgebildet und besteht aus einem PVC-Hartschaumkörper, der im Bereich seiner Oberfläche 1 zu einer tragenden kompakten und starren Haut verfestigt ist. Die Außenoberfläche dieser Haut 1 ist entweder glatt (in diesem Fall ist die Oberfläche beschichtet) oder rauh (in diesem Fall ist die Oberfläche beschichtet bzw. gestrichen).

Im Inneren des Stabquerschnittes erstrecken sich axial zum Stab und parallel zueinander Rundkanäle 2, die mit gleichem gegenseitigem Abstand längs der längeren Hauptachse des rechteckigen Stabquerschnitts mittig angeordnet sind.

Der beschriebene Stab wurde durch Strangpressen eines Gemisches der folgenden Zusammensetzung hergestellt:

| | Gewichts-anteile |
|---|---|
| S-PVC-Pulver (k-Wert 58) | 100 |
| Hochmolekulares Acrylat | 6 |
| Mark WS (Barium-Cadmium-Salz) | 4 |
| Calziumstearat | 0,5 |
| Siliziumdioxid | 0,5 |
| Glasfaser-Chips vom Typ 429 YZ der Fa. Owens Corning Fiberglas Europe, Brüssel von 4,5 mm Länge | 15 |

Das Gemisch aus den oben angegebenen Bestandteilen wurde zusammen mit einem Treibmittel in einem Rührwerk mit langsam laufenden Blättern 2 Minuten lang gemischt und dann in den Einfülltrichter einer Strangpresse eingegeben.

Die Strangpresse war eine Doppelschneckenpresse, deren Schnecken einen Durchmesser von 65 mm, eine Länge von 17 Durchmessern und eine Verdichtung von 2,5 hatten. Die Strangpresse wies hinter den Schnecken eine Lochscheibe mit 6 mm Bohrungen sowie einen Spritzkopf mit einer Rechteckdüse von 20 mm x 120 mm mit fünf gleichmäßig verteilten Dornen jeweils in der Mittelachse auf.

Jeder Dorn hatte einen Durchmesser von 12 mm. Eine rechteckige Kalibriervorrichtung, in die sich auch die Dorne hinein erstreckten, war unmittelbar am Ausgang der Extrusionsdüse koaxial zu dieser angeordnet. Eine Abzugsvorrichtung üblicher Art war am Austritt der Kalibriervorrichtung vorgesehen.

Folgende Strangpreßbedingungen wurde angewendet:

Temperaturen am Zylinder der Strangpresse vom Einfülltrichter an:

160°-170°-170°-175°-160°C

Temperaturen des Kopfes und der Extrusionsdüse: 190°C

Schnecke: auf 95°C temperiert.

Drehzahl der Schnecke: 18 UpM

Abzugsgeschwindigkeit des extrudierten und aufgeschäumten Integralschaumstabes: 65 cm/Min.

Kalibriervorrichtung: gekühlt durch Umwälzen von Wasser von etwa 20°C, kein Vakuum.

Die mittlere Dichte des Integralschaumkörpers des Stabes betrug 0,63 g/cm³ entsprechend einem Durchsatz von 59 Kg/h.

Die Dicke der Integralschaumhaut, welche praktisch porenfrei war, betrug rund 1 mm an der Außenhaut und 0,75 mm an der die Kanäle 2 umgebenden Innenhaut.

Der fertige Stab hatte eine einwandfreie glatte Oberfläche.

**Patentansprüche**

1. Integralschaumkörper
   a) mit einem Kern aus einem geschäumten thermoplastischen Werkstoff,
   b) mit einer kompakten Haut aus dem gleichen Werkstoff, und
   c) mit mindestens 10 Gew.-% in den Kern eingebetteten und über sein Volumen gleichmäßig verteilten Stapelfasern hoher Zugfestigkeit mit einer Länge von 2 mm bis 20 mm, gekennzeichnet durch die folgenden Merkmale:
   d) der thermoplastische Werkstoff ist ein extrudiertes Hart-Polyvinyl- chlorid (PVC), und
   e) 10 Gew.-% bis 20 Gew.-% Stapelfasern, bezogen auf das Gewicht des Hart-PVC, sind sowohl in den Kern als auch in die Haut eingebettet.

2. Integralschaumkörper nach Anspruch 1, dadurch gekennzeichnet, daß das extrudierte Hart-Polyvinylchlorid einen k-Wert zwischen 50 und 70, bevorzugt zwischen 55 und 63, aufweist.

3. Integralschaumkörper nach einem der Ansprüche 1 oder 2, dadurch gekennzeichnet, daß etwa 15 Gew.-% Stapelfasern verwendet werden.

4. Integralschaumkörper nach einem der Ansprüche 1 bis 3, dadurch gekennzeichnet, daß die Länge der Stapelfasern zwischen 4 und 6 mm, insbesondere etwa 4,5 mm beträgt.

5. Integralschaumkörper nach einem der Ansprüche 1 bis 4, dadurch gekennzeichnet, daß die Dicke der Stapelfasern zwischen 3 und 15 μm, insbesondere zwischen 10 und 13 μm, liegt.

6. Integralschaumkörper nach einem der Ansprüche 1 bis 5, dadurch gekennzeichnet, daß die Stapelfasern mit einem Haftvermittler beschichtet sind.

7. Integralschaumkörper nach einem der Ansprüche 1 bis 6, dadurch gekennzeichnet, daß das extrudierte Hart-Polyvinylchlorid (PVC) aus PVC- Abfällen und/oder pVC-Regenerat besteht oder diese Stoffe enthält.

8. Integralschaumkörper nach einem der Ansprüche 1 bis 7, gekennzeichnet durch einen Trägerkörper, der mit dem faserversetzten, extrudierten Hart-Polyvinylchlorid extrusionsbeschichtet ist.

9. Integralschaumkörper nach einem der Ansprüche 1 bis 8, gekennzeichnet durch die Ausbildung als Rahmenstab für Tür-, Fensterstock- oder Flügelrahmen, als Verkleidungsstab oder -brett, als Geländerlauf oder als Zaun- oder Geländerlatte.

10. Verfahren zur Herstellung eines Integralschaumkörpers nach mindestens einem der Ansprüche 1 bis 9,

a) bei dem ein aufschäumbares Ausgangsgemisch mit den Stapelfasern gemischt, aufgeschäumt und geformt wird,

b) wobei die Bildung der Integralschaumhaut durch Regulierung der Temperatur der Raumwände gesteuert wird, gekennzeichnet durch die folgenden Merkmale:

c) es wird ein Gemisch aus Hart-Polyvinylchlorid-Partikeln, Treibmitteln, deren Gehalt um 1 Gew.-% höher als dies bei extrudierem Integralschaum aus faserfreiem Hart-Polyvinylchlorid sonst erforderlich ist, und gegebenenfalls Stabilisatoren und anderen Extrusionshilfsstoffen hergestellt;

d) dem Gemisch werden die Stapelfasern in Einzelstapeln aus zusammengegefaßten einzelnen Stapelfasern zugeführt,

e) das Gemisch wird auf einen Schneckenextruder gegeben, der die einzelnen Stapelfasern bricht, mit dem Hart-Polyvinylchlorid mischt, das Gemisch plastifiziert und anschließend extrudiert,

f) nach Verlassen der Extrusionsdüse des Schneckenextruders wird das Gemisch aufgeschäumt und in einem der Extrusionsdüse nachgeschalteten Kalibrier- und Kühlkanal verfestigt.

## Revendications

1. Corps en mousse à peau intégrée comportant
a) une âme en un matériau thermoplastique moussé.
b) une peau compacte en même matériau, et
c) au moins 10% en poids de fibres coupées de résistance élevée à la traction, de longueur de 2 mm à 20 mm, noyées dans l'âme et réparties uniformément dans le volume de celle-ci.
caractérisé par les propriétés suivantes:
d) le matériau thermoplastique est un chlorure de polyvinyle dur (PVC) extrudé; et
e) 10% en poids à 20% en poids de fibres coupées, rapportés au poids du PVC dur, sont noyées non seulement dans l'âme mais également dans la peau.

2. Corps en mousse à peau intégrée selon la revendication 1, caractérisé en ce que le chlorure de polyvinyle dur extrudé présente une valeur k comprise entre 50 et 70 de préférence entre 55 et 63.

3. Corps en mousse à peau intégrée selon une des revendications 1 ou 2, caractérisé en ce que environ 15% en poids de fibres coupées sont utilisés.

4. Corps en mousse à peau intégrée selon une des revendications 1 à 3, caractérisé en ce que la longueur des fibres coupées est comprise entre 4 et 6 mm, en particulier environ 4,5 mm.

5. Corps en mousse à peau intégrée selon une des revendications 1 à 4, caractérisé en ce que l'épaisseur des fibres coupées est comprise entre 3 et 15µm, en particulier entre 10 et 13µm.

6. Corps en mousse à peau intégrée selon une des revendication 1 à 5, caractérisé en ce que les fibres coupées sont revêtues d'un agent adhésif.

7. Corps en mousse à peau intégrée selon une des revendications 1 à 6, caractérisé en ce que le chlorure de polyvinyle dur extrudé (PVC) secompose de déchets de PVC et/ou de PVC régénéré ou contient ce matériau.

8. Corps en mousse à peau intégrée selon une des revendications 1 à 7, caractérisé par un corps support qui est revêtu par extrusion de chlorure de polyvinyle dur extrudé, mélangé à des fibres.

9. Corps en mousse à peau intégrée selon une des revendications 1 à 8, caractérisé par la réalisation en tant que barre de châssis pour encadrement de porte, de fenêtre ou battants, en tant que panneau ou planche de revêtement, en tant que rampe ou en tant que latte da clôtura ou de rampe.

10. Procédé de fabrication d'un corps en mousse à peau intégrée selon au moins une des revendications 1 à 9,
a) dans lequel un mélange initial moussable est mélangé à des fibres coupées, moussé et façonné,
b) dans lequel la formation de la peau intégrée est commandée par régulation de la température des parois, caractérisé par les étapes suivantes:
c) on réalise un mélange de particules de chlorure de polyvinyle dur, d'agents moussants, dont la teneur est de 1% en poids supérieure à celle qui est autrement nécessaire dans le cas de mousse à peau intégrée extrudée en chlorure de polyvinyle dur exempt de fibres, et éventuellent de stabilisateurs et autres matériaux favorisant l'extrusion;
d) au mélage sont ajoutées les fibres coupées en lots individuels formés à partir de fibres coupées individuelles réunies;
e) le mélange est délivré à une extrudeuse à vis, qui rompt les fibres coupées individuelles, les mélange au chlorure de polyvinyle dur, plastifie le mélange et ensuite l'extrude;
f) après avoir quitté la filière d'extrusion de l'extrudeuse à vis, le mélange ast moussé et est solidifié dans un canal de calibrage et de refroidissement disposé en aval de la filière d'extrusion.

## Claims

1. An integral foam body
(a) having a core of a foamed thermoplastic material,
(b) having a compact skin of the same material, and
(c) having at least 10% by weight of staple fibres of high tensile strength with a length from 2mm to 20mm embedded in the core and distributed uniformly over its volume, characterised by the following features:
(d) the thermoplastic material is an extruded rigid polyvinyl chloride (PVC); and
(e) 10% by weight to 20% by weight of staple fibres, in relation to the weight of the rigid PVC are embedded both in the core and in the skin.

2. An integral foam body according to Claim 1, characterised in that the extruded rigid polyvinyl chloride has a k-value between 50 and 70, preferably between 55 and 63.

3. An integral foam body according to Claim 1 or 2, characterised in that about 15% by weight of staple fibres are used.

4. An integral foam body according to any one of Claims 1 to 3, characterised in that the length of the staple fibres is between 4 and 6mm, particularly about 4.5mm.

5. An integral foam body according to any one of Claims 1 to 4, characterised in that the thickness of the staple fibres is between 3 and 15 µm, particularly between 10 and 13 µm.

6. An integral foam body according to any one of Claims 1 to 5, characterised in that the staple fibres are coated with a primer.

7. An integral foam body according to any one of Claims 1 to 6, characterised in that the extruded rigid polyvinyl chloride (PVC) consists of PVC waste and/or regenerated PVC or contains these substances.

8. An integral foam body according to any one of Claims 1 to 7, characterised by a supporting member which is extrusion coated with the extruded rigid polyvinyl chloride mixed with fibre.

9. An integral foam body according to any one of Claims 1 to 8, characterised by its construction in the form of a frame bar for door frames, window sash frames or casements, of a facing bar or board, of a balustrade or of a fence picket or railing support.

10. A method of producing an integral foam body according to at least one of the Claims 1 to 9,

(a) wherein a foamable basic mixture is mixed with the staple fibres, foamed and shaped,

(b) while the formation of the integral foam skin is controlled by controlling the temperature of the space walls, characterised by the following features:

(c) a mixture is produced from rigid polyvinyl chloride particles, blowing agents, the content of which is higher by 1% by weight than is otherwise necessary for extruded integral foam of fibre-free rigid polyvinyl chloride, and possibly stabilizers and other extrusion aids;

(d) the staple fibres are added to the mixture in individual heaps of combined individual staple fibres;

(e) the mixture is fed to a screw extruder which breaks the individual staple fibres, mixes them with the rigid polyvinyl chloride, plasticizes the mixture and then extrudes it;

(f) after leaving the extrusion die of the screw extruder, the mixture is foamed and consolidated in a sizing and cooling channel following on the extrusion die.